# EUROPEAN PATENT APPLICATION

(11) **EP 4 851 902 A1**
(43) Date of publication of application: **09.12.2026**
(21) Application number: 25751171.7
(22) Date of filing: 21.01.2025
(51) Int. Cl.: G06Q 20/32

(54) **PAYMENT INTERACTION PROCESSING**

(30) Priority: 06.02.2024 CN 202410172521
(71) Applicant: Alipay (Hangzhou) Digital Service Technology Co., Ltd., Hangzhou, Zhejiang 310000 (CN)
(72) Inventor: YU, Qiulu, Hangzhou, Zhejiang 310000 (CN); SHI, Ke, Hangzhou, Zhejiang 310000 (CN); CHEN, Zhiyuan, Hangzhou, Zhejiang 310000 (CN)
(74) Representative: Winter, Brandl - Partnerschaft mbB
(86) International application number: PCT/CN2025/073497
(87) International publication number: WO 2025/167569

(57) **Abstract**

Disclosed in the embodiments of the present description are a payment interaction processing method, apparatus and device, which are applicable to specified cash registers, and, which, for NFC payment modes or other similar payment modes, help to enhance the user's certainty while reducing the possibilities of user misjudgment and erroneous operations, thus further improving the user experience. A solution comprises: determining pending payment information, and, displaying the pending payment information on a cash register by means of a transfer-pending visual effect; and if a mobile terminal of a user for payment is successfully identified via a short-distance identification area contained in the cash register, transferring the pending payment information to the mobile terminal by means of a transfer in-progress visual effect, so that the mobile terminal receives the pending payment information by means of a transfer-receiving visual effect, so as to complete the payment.

## Description

### TECHNICAL FIELD

The present specification relates to the field of payment technologies, and in particular, to a payment interaction processing method, apparatus, and device.

### BACKGROUND

With the development of Internet technologies and the popularization of the use of smartphones, more and more services are performed on smartphones through corresponding applications. Payment services are a type of service frequently performed on smartphones in daily life.

At present, smartphones are capable of performing payment based on a two-dimensional code; however, with this payment mode, user operations are rather cumbersome. Therefore, as more and more smartphones support near field communication (NFC) functionality, the NFC payment mode has also been increasingly used.

Under the NFC payment mode, a user does not need to invoke a mobile phone camera or a two-dimensional code, but may perform payment more conveniently by bringing a smartphone supporting NFC functionality into contact with a payment terminal, and prompting the user of a successful payment through a "beep" sound. However, in practical applications, there are also some problems. For example, a user may need to repeatedly probe a contact location of the smartphone on the payment terminal. Moreover, in addition to waiting for the "beep" sound, the user's perception of the entire progress of the payment is rather vague, accompanied by a feeling of uncertainty, which may also lead to user misjudgments and misoperations.

Based on this, for the NFC payment mode or other similar payment modes, there is a need for a solution that helps enhance the user's sense of certainty, reduces the possibility of user misjudgments and misoperations, and further improves user experience.

### SUMMARY

One or more embodiments of the present specification provide a payment interaction processing method, apparatus, device, and storage medium, to solve the following technical problem: for the NFC payment mode or other similar payment modes, there is a need for a solution that helps enhance the user's sense of certainty, reduces the possibility of user misjudgments and misoperations, and further improves user experience.

To solve the above technical problem, one or more embodiments of the present specification are implemented as follows.

One or more embodiments of the present specification provide a payment interaction processing method, applied to a designated payment terminal, the method comprising: determining pending payment information, and displaying, through a transfer-waiting visual effect, the pending payment information on the payment terminal; and in response to a mobile terminal used by a user for payment being successfully identified through a short-range identification area included in the payment terminal, transferring, through a transferring visual effect, the pending payment information to the mobile terminal, to cause the mobile terminal to receive, through a transfer-receiving visual effect, the pending payment information for completing payment.

One or more embodiments of the present specification provide a payment interaction processing method, applied to a mobile terminal used by a user for payment, the method comprising: bringing, under a handheld mobile operation of the user, the mobile terminal close to a short-range identification area included in a payment terminal, so as to allow the payment terminal to perform identification; in response to being successfully identified by the payment terminal, receiving, through a transfer-receiving visual effect, the pending payment information transferred from the payment terminal; and performing payment according to the pending payment information.

One or more embodiments of the present specification provide a payment interaction processing apparatus, applied to a designated payment terminal, the apparatus comprising: a transfer-waiting effect processing module, configured to determine pending payment information, and display, through a transfer-waiting visual effect, the pending payment information on the payment terminal; and a transferring effect processing module, configured to: in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

One or more embodiments of the present specification provide a payment interaction processing apparatus, applied to a mobile terminal used by a user for payment, the apparatus comprising: a short-range identification processing module, configured to bring, under a handheld mobile operation of the user, the mobile terminal close to a short-range identification area included in a payment terminal, so as to allow the payment terminal to perform identification; a transfer-receiving effect processing module, configured to: in response to being successfully identified by the payment terminal, receive, through a transfer-receiving visual effect, the pending payment information transferred from the payment terminal; and a payment processing module, configured to perform payment according to the pending payment information.

One or more embodiments of the present specification provide a payment interaction processing device, applied to a designated payment terminal, the device comprising: at least one processor; and a memory communicatively connected to the at least one processor; wherein the memory stores instructions executable by the at least one processor, the instructions, when executed by the at least one processor, cause the at least one processor to: determine pending payment information, and display, through a transfer-waiting visual effect, the pending payment information on the payment terminal; and in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

One or more embodiments of the present specification provide a payment interaction processing device, applied to a mobile terminal used by a user for payment, the device comprising: at least one processor; and a memory communicatively connected to the at least one processor; wherein the memory stores instructions executable by the at least one processor, the instructions, when executed by the at least one processor, cause the at least one processor to: bring, under a handheld mobile operation of the user, the mobile terminal close to a short-range identification area included in a payment terminal, so as to allow the payment terminal to perform identification; in response to being successfully identified by the payment terminal, receive, through a transfer-receiving visual effect, the pending payment information transferred from the payment terminal; and perform payment according to the pending payment information.

One or more embodiments of the present specification provide a non-transitory computer storage medium, storing computer-executable instructions, applied to a designated payment terminal, the computer-executable instructions being configured to: determine pending payment information, and display, through a transfer-waiting visual effect, the pending payment information on the payment terminal; and in respons eto a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

One or more embodiments of the present specification provide a non-transitory computer storage medium, storing computer-executable instructions, applied to a mobile terminal used by a user for payment, the computer-executable instructions being configured to: bring, under a handheld mobile operation of the user, the mobile terminal close to a short-range identification area included in a payment terminal, so as to allow the payment terminal to perform identification; in response to being successfully identified by the payment terminal, receive, through a transfer-receiving visual effect, the pending payment information transferred from the payment terminal; and perform payment according to the pending payment information.

The at least one technical solution adopted by one or more embodiments of the present specification can achieve the following beneficial effects: a novel payment interaction mode across physical and digital media and a corresponding payment terminal are provided; the pending payment information displayed on the payment terminal through a transfer-waiting visual effect enables a user to more intuitively and clearly understand what is currently to be paid, and to know when the mobile terminal (for example, a smartphone or a smart watch) needs to be brought close to the short-range identification area included in the payment terminal; based on the transfer-waiting visual effect, the user may even more clearly know where or in which direction (i.e., the corresponding transfer direction) the short-range identification area is, thereby helping the user to cause the mobile terminal to be successfully identified by the payment terminal in a single operation; further, after successful identification, the user is able to intuitively and clearly see, on the payment terminal, the animated process of the pending payment information being transferred to the mobile terminal through the transferring visual effect, and then is also able to see, on the mobile terminal through the transfer-receiving visual effect, that the pending payment information has been transferred over instantaneously; such an interaction process gives the user a feeling as if, based on the explicit prompts or guidance provided by the above visual effects, the pending payment information, like a tangible object, accurately runs from the payment terminal to the mobile terminal; the user understands the entire process and each change point therein clearly and accurately, with the sense of certainty and sense of participation effectively enhanced, and with a sense of fun, which helps reduce the possibility of user misjudgments and misoperations, and can improve user experience.

### BRIEF DESCRIPTION OF THE DRAWINGS

To describe the technical solutions in the embodiments of the present specification or in the prior art more clearly, the drawings needed for describing the embodiments or the prior art will be briefly introduced hereinafter. Apparently, the drawings in the following description merely illustrate some embodiments recorded in the present specification. A person of ordinary skill in the art may derive other drawings from these drawings without creative efforts.
FIG. 1 is a schematic flowchart of a payment interaction processing method applied to a designated payment terminal according to one or more embodiments of the present specification.
FIG. 2 is a schematic flowchart of a scheme for representing visual effects related to the transfer of pending payment information based on an extraction-inhalation manner according to one or more embodiments of the present specification.
FIG. 3 is a schematic flowchart of a scheme for coordinating a transfer process of pending payment information based on light effects according to one or more embodiments of the present specification.
FIG. 4 is a schematic flowchart of a scheme for assisting a user to make a payment again based on transfer-related visual effects according to one or more embodiments of the present specification.
FIG. 5 is a schematic flowchart of a payment interaction processing method applied to a mobile terminal used by a user for payment according to one or more embodiments of the present specification.
FIGS. 6(a)-6(g) are schematic diagrams of effects of a specific implementation of the method of FIG. 1 in an application scenario according to one or more embodiments of the present specification.
FIG. 7 is a schematic structural diagram of a payment interaction processing apparatus applied to a designated payment terminal according to one or more embodiments of the present specification.
FIG. 8 is a schematic structural diagram of a payment interaction processing apparatus applied to a mobile terminal used by a user for payment according to one or more embodiments of the present specification.
FIG. 9 is a schematic structural diagram of a payment interaction processing device applied to a designated payment terminal according to one or more embodiments of the present specification.
FIG. 10 is a schematic structural diagram of a payment interaction processing device applied to a mobile terminal used by a user for payment according to one or more embodiments of the present specification.

### DETAILED DESCRIPTION

Embodiments of the present specification provide a payment interaction processing method, apparatus, device, and storage medium.

To enable a person skilled in the art to better understand the technical solutions of the present specification, the technical solutions of the embodiments of the present specification will be clearly and completely described hereinafter with reference to the drawings in the embodiments of the present specification. Apparently, the described embodiments are merely a part of the embodiments of the present application, rather than all the embodiments. Based on the embodiments of the present specification, all other embodiments obtained by a person of ordinary skill in the art without creative efforts shall fall within the protection scope of the present application.

For the NFC payment mode and similar payment modes based on proximity identification mentioned in the background art, the problems mentioned in the background art exist. To solve these problems, the present application proposes a novel payment interaction mode across physical and digital media, which can be used to optimize the above payment modes. A novel payment terminal provided in the present application needs to be used, or an existing payment terminal may be modified (the modified payment terminal is referred to as a designated payment terminal), and corresponding modifications may also be made on the mobile terminal used by the user for payment, thereby improving the convenience, fun, and reliability of user payment, and effectively improving user experience.

The solutions of the present application are further described in detail below. The solutions relate to a designated payment terminal and a mobile terminal used by a user for payment, and are mainly described from the perspective of the payment terminal.

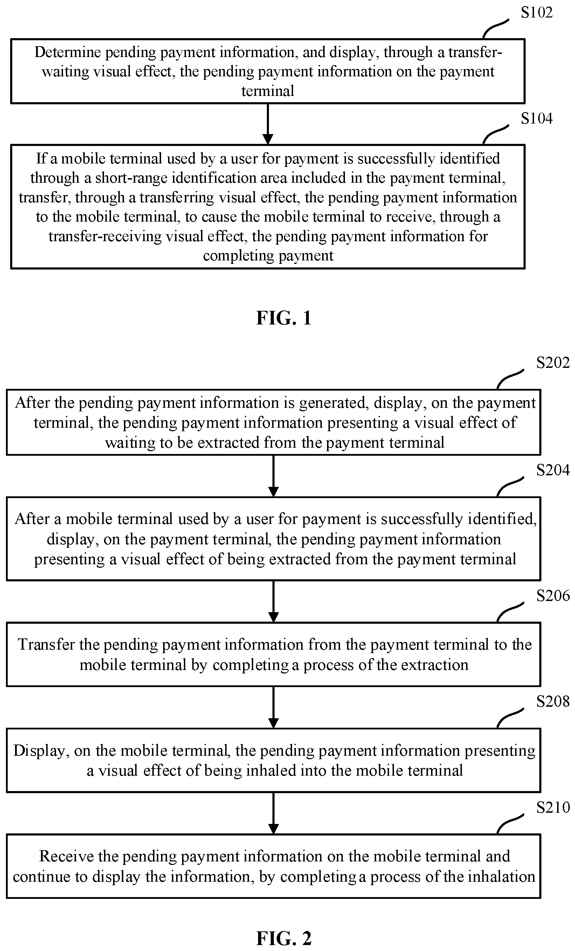

FIG. 1 is a schematic flowchart of a payment interaction processing method according to one or more embodiments of the present specification. The method may be applied to a designated payment terminal. From a software perspective, the execution subject of the process includes an application client or a server on the payment terminal. From a hardware perspective, the execution subject of the process includes the payment terminal itself. The payment terminal may be obtained by upgrading and modifying an existing device such as a payment announcement device, a vending machine, a POS machine, or a mobile terminal used by another user, or may be a newly-manufactured payment terminal. The user's mobile terminal may typically be a smartphone, and may alternatively be another mobile terminal such as a tablet computer, a smart watch, or a portable game machine.

The process in FIG. 1 includes the following steps.

S102: pending payment information is determined, and the pending payment information is displayed, through a transfer-waiting visual effect, on the payment terminal.

In one or more embodiments of the present specification, the pending payment information includes: information for prompting a current user to perform payment, such as what needs to be paid for and/or how much needs to be paid. The pending payment information may be, for example, a to-be-paid order given by a merchant to the user or a transfer request between users. Taking a to-be-paid order as an example, to enable the user to more clearly understand, the pending payment information may include sufficiently detailed order information.

The pending payment information may be generated on the payment terminal, or may be generated on another device (for example, a server) and then provided to the payment terminal. The user's mobile terminal needs to rely on the pending payment information to perform payment. Therefore, in the solutions of the present application, the pending payment information is transferred from the payment terminal to the mobile terminal. More importantly, a manner that is easy for the user to understand and has better technological appeal is adopted, and based on additional multiple vivid and explicit dynamic visual effects, such a transfer process is completed, so as to accurately and efficiently prompt or guide the user.

In one or more embodiments of the present specification, the pending payment information itself presents a transfer-waiting visual effect on the payment terminal. On the one hand, the transfer-waiting visual effect may be used to give the user a feeling that the pending payment information can be taken out from the payment terminal (the degree of such implicit or explicit suggestion may be adjusted according to actual needs) for payment; and on the other hand, in some examples, the transfer-waiting visual effect may even prompt a corresponding transfer direction. Based on the transfer direction, the user is able to intuitively understand where the mobile terminal should be brought close to, so as to take the pending payment information out from the payment terminal.

It should be noted that, since a transferring visual effect is also used subsequently, the corresponding transfer direction may not be directly prompted in the transfer-waiting visual effect, but may be prompted in the transferring visual effect instead. In this case, the transfer-waiting visual effect may focus more on presenting a feeling of waiting for the user to pick up, so as to efficiently attract the user's attention and guide the user to operate accurately and timely as a matter of course.

Further, additional light effects may also be used to assist the displayed pending payment information, to enhance the transfer-waiting visual effect and other visual effects used subsequently. In this case, the payment terminal may even not need to display text information that directly prompts the user to interact, and the user is still able to correctly understand based on the visual effects of the pending payment information and the additional light effects.

S104: if a mobile terminal used by a user for payment is successfully identified through a short-range identification area included in the payment terminal, the pending payment information is transferred through a transferring visual effect to the mobile terminal, to cause the mobile terminal to receive, through a transfer-receiving visual effect, the pending payment information for completing payment.

In one or more embodiments of the present specification, the short-range identification area may be, for example, an NFC identification area that is an area for identification based on induction, and may also be an area for identification based on another short-range wireless communication mode (for example, Bluetooth). Alternatively, a camera may also be used for short-range image identification, and this manner may be used in conjunction with short-range wireless communication.

Guided by the prompt of the pending payment information displayed through the transfer-waiting visual effect, the user may bring their mobile terminal close to the short-range identification area, so as to allow the payment terminal to perform identification.

The identification of the mobile terminal by the payment terminal, and the transfer of the pending payment information after successful identification may be performed using the same mode (for example, both based on the short-range wireless communication mode corresponding to the short-range wireless communication identification area), or may be performed using different modes (for example, identification uses image identification, and transfer uses the short-range wireless communication mode; as another example, identification and transfer respectively use two different short-range wireless communication modes). A specific implementation may be determined according to cost requirements or efficiency requirements.

In one or more embodiments of the present specification, the transferring visual effect can more vividly present, on the payment terminal, the direction to which the pending payment information is currently being transferred. The direction may particularly include the direction where the short-range identification area is located. Since the mobile terminal is in the direction close to the short-range identification area at this time, the transferring visual effect substantially presents that the pending payment information is being dynamically transferred from the payment terminal to the mobile terminal, as if the digital medium (i.e., the pending payment information presented through the transferring visual effect) breaks through the limitation of the virtual digital world, and is about to emerge from one physical medium (i.e., the payment terminal) and cross the physical space to rush toward another physical medium (i.e., the mobile terminal). This kind of virtual interaction effect full of technological appeal is quite consistent with the user's intuition, gives the user a strong sense of immediacy and certainty, and helps the user understand what is happening at the moment and which specific stage has been reached.

For the visual effect for prompting the transfer direction, in order to make such an effect easier to understand, the displayed pending payment information may be relatively close to the short-range identification area in position. For example, the pending payment information may be displayed directly in the short-range identification area; as another example, the pending payment information may be displayed in another area, and the other area is close to the short-range identification area.

The latter manner listed in the preceding paragraph helps more clearly present the transfer direction, and also helps prevent the user from incorrectly understanding the short-range identification area; therefore, this manner is taken as an example for description. In addition to the short-range identification area, the payment terminal may further include another area for displaying the pending payment information, referred to as an information display area. The information display area is positioned close to the short-range identification area on the payment terminal, for example, adjacent to each other; then, the transfer direction corresponding to the transfer-waiting visual effect and/or the transferring visual effect may be directed from the information display area toward the short-range identification area. When the user brings the mobile terminal close to the short-range identification area, the mobile terminal will also become close to the pending payment information displayed in the information display area in terms of positional relationship; therefore, the subsequent transfer of the pending payment information is also smoother and more natural, helping to eliminate a sense of abruptness.

In one or more embodiments of the present specification, after the transfer is initiated, the mobile terminal may also correspondingly present a transfer-receiving visual effect. To improve visual coordination and scenario consistency, the transferring visual effect, the transferring visual effect, and the transfer-receiving visual effect may belong to a unified set of effects, and the mobile terminal may also be upgraded with a corresponding application in advance to be able to present the transfer-receiving visual effect.

Further, after the pending payment information is received and displayed on the mobile terminal, the user is able to more conveniently know, for example, which order this is and how much needs to be paid, and then may complete the current payment through a user's active confirmation (for example, the user clicks a confirmation button for the pending payment information or actively triggers facial recognition to indicate confirmation) or adaptive automatic confirmation (for example, if no user questioning operation is received within a set time period, it is considered that the user has confirmed, and then a deduction may be automatically performed).

In this confirmation stage, visual effects may also be added. For example, the pending payment information may be displayed as a bubble-shaped virtual object, and the user clicks to burst the bubble to indicate confirming the payment, etc., thereby helping the entire set of process achieve a better closure in the dimension of visual presentation.

Through the method of FIG. 1, a novel payment interaction mode across physical and digital media and a corresponding payment terminal are provided; the pending payment information displayed on the payment terminal through a transfer-waiting visual effect enables a user to more intuitively and clearly understand what is currently to be paid, and to know when the mobile terminal (for example, a smartphone or a smart watch) needs to be brought close to the short-range identification area included in the payment terminal; based on the transfer-waiting visual effect, the user may even more clearly know where or in which direction the short-range identification area is (i.e., the corresponding transfer direction), thereby helping the user to cause the mobile terminal to be successfully identified by the payment terminal in a single operation; further, after successful identification, the user is able to intuitively and clearly see, on the payment terminal, the animated process of the pending payment information being transferred to the mobile terminal through the transferring visual effect, and then is also able to see, on the mobile terminal through the transfer-receiving visual effect, that the pending payment information has been transferred over instantaneously; such an interaction process gives the user a feeling as if, based on the explicit prompts or guidance provided by the above visual effects, the pending payment information, like a tangible object, accurately runs from the payment terminal to the mobile terminal; the user understands the entire process and each change point therein clearly and accurately, with the sense of certainty and sense of participation effectively enhanced, and with a sense of fun, which helps reduce the possibility of user misjudgments and misoperations, and can improve user experience.

Based on the method of FIG. 1, the present specification also provides some specific implementation solutions and extension solutions of the method, which are further described below.

Several effects mentioned above may be implemented with multiple alternative solutions during specific implementation, and solutions with relatively strong dynamic sense and interaction sense and more vivid images may be selected as much as possible. Intuitively, for ease of understanding, one or more embodiments of the present specification provide a schematic flowchart of a scheme for representing visual effects related to the transfer of pending payment information based on an extraction-inhalation manner, as shown in FIG. 2.

The process in FIG. 2 includes the following steps.

S202: after the pending payment information is generated, the pending payment information presenting a visual effect of waiting to be extracted from the payment terminal is displayed on the payment terminal.

The visual effect of extraction may be diverse. For example, the pending payment information may jitter toward a specified direction with an invisible pull; as another example, air flow direction lines in the extraction direction may be displayed; as yet another example, the pending payment information may deform toward a specified direction, etc.

S204: after a mobile terminal used by a user for payment is successfully identified, the pending payment information presenting a visual effect of being extracted from the payment terminal is displayed on the payment terminal.

S206: the pending payment information is transferred from the payment terminal to the mobile terminal by completing the extraction process.

S208: the pending payment information presenting a visual effect of being inhaled into the mobile terminal is displayed on the mobile terminal.

From the user's perspective, such a visual effect gives the feeling that the user brings the mobile terminal close to the payment terminal, as if the mobile terminal were an air extraction pump, a water extraction pump, or a magnet, extracting the pending payment information, which seems like a physical medium, from the payment terminal into the mobile terminal. This manner is novel and has a strong sense of fun.

S210: the pending payment information is received on the mobile terminal for being displayed continuously, by completing the inhalation process.

In practical applications, only a portion of the steps in this process may be selectively used.

In addition to the extraction-inhalation manner, similarly, other manners such as fly-out/fly-in, pop-out/pop-in, and flash-out/flash-in may also be used to implement the above visual effects.

From the listed representation manners, it can be seen that the more the manners can imitate some dynamic interaction modes of real entities, the more the user can be enabled to understand and cooperate more accurately. Based on this idea, a more skeuomorphic or personified style and image of the pending payment information may be created, weakening the abstract feeling that the pending payment information may bring as a pile of text, values, or tables, thereby enabling the above various visual effects to be presented more naturally and smoothly.

Taking skeuomorphic processing as an example. The pending payment information may be packaged as a virtual object for display and transfer on the payment terminal. The degree of packaging may be determined according to needs: for example, the pending payment information may be packaged as a virtual object mainly presenting a contour shape (for example, circular, elliptical, arrow-shaped, etc.) without necessarily showing what object it is; as another example, the pending payment information may be packaged as a more specific virtual spherical item (such as a glass ball, a bubble, a sports ball, etc.) or a virtual metallic item that can be attracted by a magnet (such as a coin, a medal, etc.); and the like. When presenting the transfer-related visual effects, the virtual object may present corresponding elastic deformation dynamic effects to more vividly present the transfer process.

Further, based on the packaging image of the pending payment information, more intuitive and valuable business semantics may also be visually provided to the user. For example, assuming that the pending payment information corresponds to a purchase order, the pending payment information may be packaged as: a virtual item capable of reflecting the purchased goods or service corresponding to the pending payment information (for example, the current user is purchasing a piece of clothing, and then the pending payment information may be packaged as a virtual piece of clothing, so that the virtual piece of clothing can subsequently be transferred from the payment terminal to the mobile terminal). In this way, even without text prompts, the user can easily understand which of their orders is to be paid and what is being purchased, and through the transfer effect, the user can virtually acquire the corresponding virtual content, which feels consistent with the user actually obtaining the corresponding real content after payment, providing a better experience. This can particularly solve the problem that the payment experience and the shopping experience feel disconnected in some scenarios (the reason being that the payment platform relied upon for payment and the e-commerce platform relied upon for shopping may not belong to the same entity).

In one or more embodiments of the present specification, for different states corresponding to the pending payment information in the payment interaction processing, multiple light effects may also be used on the payment terminal for prompting or guidance, particularly at the short-range identification area, so that the short-range identification area is more eye-catching, and the user is enabled to bring the mobile terminal close to the short-range identification area and easily observe changes in the light effects.

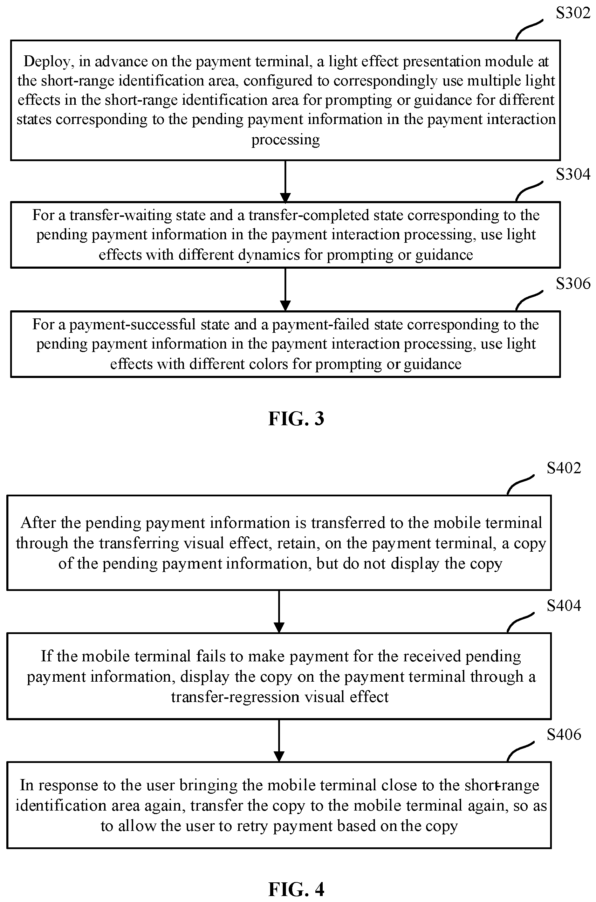

For example, one or more embodiments of the present specification provide a schematic flowchart of a scheme for coordinating a transfer process of pending payment information based on light effects, as shown in FIG. 3.

The process in FIG. 3 includes the following steps.

S302: a light effect presentation module is deployed for the short-range identification area in advance on the payment terminal, wherein the light effect presentation module is configured to correspondingly use multiple light effects in the short-range identification area for prompting or guidance for different states corresponding to the pending payment information in the payment interaction processing.

In one or more embodiments of the present specification, the light effect presentation module may be deployed surrounding the short-range identification area, and correspondingly, the light effects may also be dynamically presented surrounding the short-range identification area, so as to more conspicuously display the boundary contour of the short-range identification area to the user, making the short-range identification area more prominent, helping the user to operate correctly in a single attempt, and also facilitating the design of different dynamic light effects that help reflect the transfer relationship and payment situation.

For the novel payment terminal provided in the present application, the above functional areas and the light effect presentation module have been deployed before leaving the factory, and software updates may be performed according to needs to support the presentation of the designed different visual effects and additional light effects.

S304: for a transfer-waiting state and a transfer-completed state corresponding to the pending payment information in the payment interaction processing, light effects with different dynamics are used for prompting or guidance.

When the pending payment information is displayed through the transfer-waiting visual effect, the pending payment information is in the transfer-waiting state. When the transferring visual effect ends and the pending payment information has been transferred to the mobile terminal, the pending payment information is in the transfer-completed state.

Compared with the transfer-completed state, a more dynamic light effect may be used for the transfer-waiting state for prompting or guidance, for example, prompting the corresponding transfer direction through regular trajectory changes of the light effects. The transferring state corresponding to the transferring visual effect may also be handled in a similar manner. In the transfer-completed state, for example, a constant-on light effect may be used.

S306: for a payment-successful state and a payment-failed state corresponding to the pending payment information in the payment interaction processing, light effects with different colors are used for prompting or guidance.

After the pending payment information is transferred to the mobile terminal, the user performs payment, which may be successful or may fail. For the user, the payment-failed situation especially requires attention; therefore, a distinctive warning color (for example, red) light effect may be used to prominently prompt the user of the payment-failed state, so as to attract the user's attention and allow the user to retry the payment or give up the payment. For the payment-successful state, a more relaxed prompt may be used, for example, a blue light effect may be used.

Similarly, for different states, corresponding light effects may be designed in advance in a targeted manner based on the degree of distinction needed or the importance of the state itself to the user, so as to be used in coordination with the visual effects in the corresponding states.

In one or more embodiments of the present specification, in the case of payment failure, re-payment is often cumbersome to operate, and may even require the cashier to re-operate. The novel interaction mode of the present application is used to solve this problem and improve the convenience of the user's re-payment operation.

FIG. 4 is a schematic flowchart of a scheme for assisting a user to make a payment again based on transfer-related visual effects according to one or more embodiments of the present specification.

The process in FIG. 4 includes the following steps.

S402: after the pending payment information is transferred to the mobile terminal through the transferring visual effect, a copy of the pending payment information is retained on the payment terminal, but the copy is not displayed.

In one or more embodiments of the present specification, the transfer of the pending payment information mentioned above substantially refers to the transfer of the pending payment information in a display state presented through the transfer-waiting visual effect and other effects. To facilitate payment retry, the content substantially included in the pending payment information may still be temporarily retained on the payment terminal, i.e., a copy of the pending payment information is retained. In order to give the user a feeling of the validity and authenticity of the transfer action visually, the copy is temporarily not displayed on the payment terminal after the transfer, in preparation for possible uses. The copy may be data packaged through a corresponding visual effect, or may be unpackaged raw data. The distinction between the transferred pending payment information and the retained copy in terms of status may not be made here; they may be considered as substantially consistent data.

S404: if the mobile terminal fails to make payment for the received pending payment information, the copy is displayed on the payment terminal through a transfer-regression visual effect.

If the mobile terminal successfully makes payment for the received pending payment information, the copy may not need to appear, and the payment terminal may delete the copy at an appropriate time.

If the payment fails, the copy may be displayed through the transfer-regression visual effect, it presents to the user the feeling that: the pending payment information that has been transferred seems to have automatically returned (i.e., transfer regression) from the mobile terminal to the payment terminal. To more clearly present this feeling, the transfer-regression direction may also be similarly presented in the visual effect, i.e., from the short-range identification area or the mobile terminal toward the information display area; further, a transferring visual effect may also be displayed on the mobile terminal, indicating that the pending payment information or the payment failure information is being transferred toward the payment terminal.

S406: in response to the user bringing the mobile terminal close to the short-range identification area again, the copy is transferred to the mobile terminal again, so as to allow the user to retry payment based on the copy.

After the transfer regression is completed, the payment terminal may still display the copy according to the previous transfer-waiting effect (or an additional effect update may be made to indicate that this is a payment retry), and the user may similarly retry payment through a simple operation again.

Through the solution in FIG. 4, the cashier does not need to intervene to re-operate, and the user does not need to perform cumbersome operations; the visual effects on the payment terminal and the mobile terminal are also clear and easy to understand, and are not likely to cause misunderstanding.

Further, if repeated failures exceed a set number of times, additional effect processing may be performed to prevent inconvenience caused by falling into a loop. For example, assuming the pending payment information is displayed in the form of a virtual bubble, the virtual bubble may be presented with an effect of being burst.

In addition, in the above process, in addition to the presentation of visual effects, corresponding sound effects or voice prompts may also be used as supplements to further improve reliability.

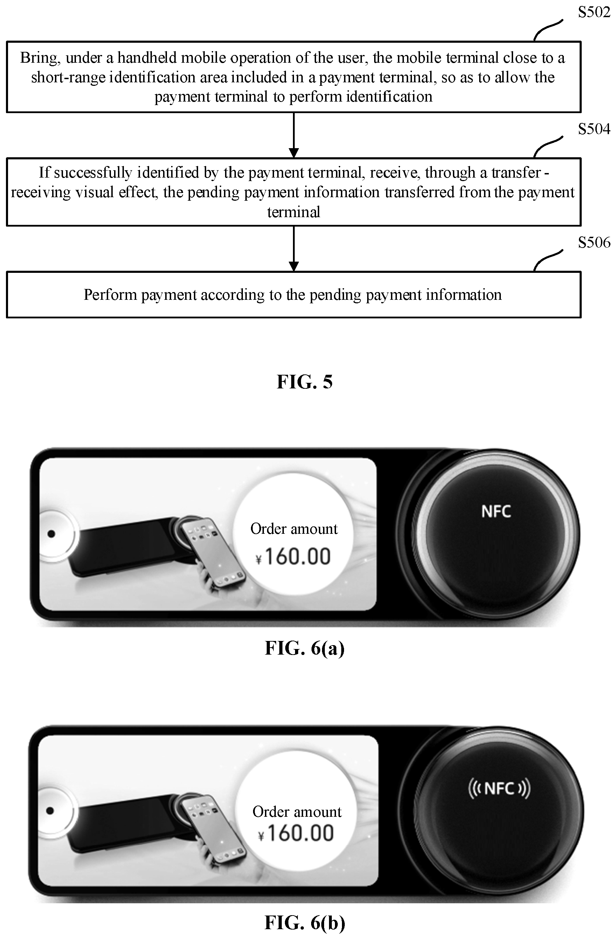

The foregoing process is mainly described from the perspective of the payment terminal. Based on the same idea, one or more embodiments of the present specification also provide a schematic flowchart of a payment interaction processing method applied to a mobile terminal used by a user for payment, which is described from the perspective of the mobile terminal, as shown in FIG. 5.

The process in FIG. 5 includes the following steps.

S502: under a handheld mobile operation of the user, the mobile terminal is brought close to a short-range identification area included in a payment terminal, so as to allow the payment terminal to perform identification.

S504: If the mobile terminal is successfully identified by the payment terminal, the pending payment information transferred from the payment terminal is received through a transfer-receiving visual effect.

It should be noted that, for the mobile terminal, the solution may also be implemented by the mobile terminal itself. If the payment terminal itself does not support the presentation of the foregoing visual effects (for example, the payment terminal has not been correspondingly upgraded and modified, or the payment terminal may not even have a user-facing display screen), then the corresponding visual effects may be presented only on the mobile terminal, which still helps improve user experience to a certain extent, and also improves the flexibility and applicability of the solution.

S506: payment is performed according to the pending payment information.

The description here is only briefly from the perspective of the mobile terminal, and specific implementation details may be understood with reference to the foregoing description, and will not be repeated here.

According to the foregoing description, more intuitively, one or more embodiments of the present specification provide schematic diagrams of effects of a specific implementation of the method of FIG. 1 in an application scenario, as shown in FIGS. 6(a)-6(f).

In this application scenario, a novel payment terminal supporting NFC identification payment is provided. The payment terminal includes an information display area located on the left side of the device and an NFC identification area located on the right side of the device (as the short-range identification area described above). Guided by the prompts of the novel interactive visual effects, the user brings a smartphone or other portable smart device supporting NFC functionality close to, or into contact with, the NFC identification area on the right side of the device, thereby achieving fast and secure payment. The entire process is clear and explicit, with a sense of dynamics and technological appeal, forming a novel virtual interaction experience across physical media.

If there is currently no pending payment information, a standby interface may be displayed. For example, the information display area may schematically display some prompt information, such as "Unlock phone, tap to pay"; surrounding the NFC identification area, for example, a gentle breathing white light effect may be used, and an "NFC" text light effect that dynamically changes may also be included in the NFC identification area. In addition, an enterprise or product logo may also be added at an appropriate position as needed, which is omitted in the figures.

FIG. 6(a) shows a schematic diagram of the effect of displaying, through a transfer-waiting visual effect, the pending payment information after the pending payment information (for example, an order information with an amount of 160 yuan) is generated. It can be seen that the pending payment information is packaged into a spherical virtual item like a bubble or a bouncy ball (hereinafter briefly referred to as a bubble for ease of description), in which specific information such as "order amount" is shown. Of course, the pending payment information may also include more payment-related detailed information, which may not necessarily all be shown on the bubble.

The bubble is displayed at a position close to the NFC identification area, and through dynamic trajectory lines in styles such as "wind direction lines" or "flowing water lines", the effect of the bubble waiting to be extracted toward the NFC identification area is vividly presented. In practical applications, the effect presentation is dynamic. For example, the bubble dynamically deforms with the extraction force, and the dynamic trajectory lines flow toward the NFC identification area, indicating that the transfer direction is from the bubble toward the NFC identification area.

At this time, for example, the following light effects are exemplarily used: a blue halo is presented surrounding the NFC identification area, and the blue halo gradually changes from the left side until the entire ring is lit up, and then contracts to a semicircle and cycles. The "NFC" text light effect, for example, plays once or loops.

At the same time, a sound effect may also be emitted for prompting, for example, playing "Please unlock the phone, tap to pay."

In this case, if the user's mobile terminal is not successfully identified within a timeout period (set according to needs, for example, 30 seconds), the device may automatically return to the standby interface.

FIG. 6(b) shows another state of the light effects around the NFC identification area and the "NFC" text light effect. It can be seen that, viewed together with FIG. 6(a), the ring light effect around the NFC identification area is in transition, and the signal pattern on the "NFC" text band is also dynamically flickering.

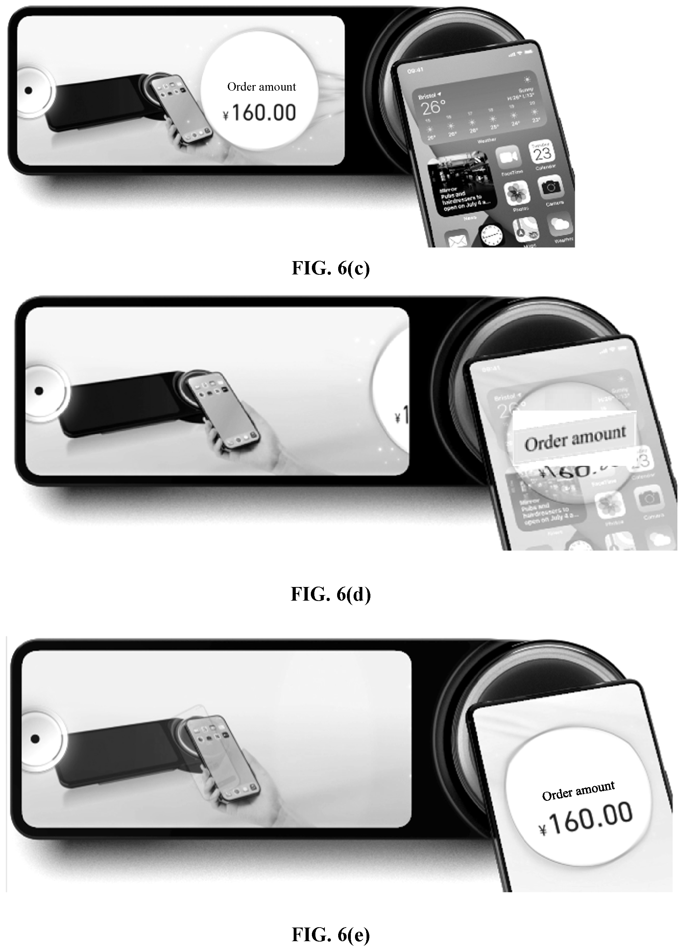

FIG. 6(c) shows that the user brings the smartphone used for the current payment close to the NFC identification area, so as to allow the payment terminal to attempt to identify the smartphone through NFC.

If the identification fails, a corresponding prompt may be displayed in the information display area according to a possible failure reason, for example, prompting "Please unlock the phone first, then tap to pay" or "Please turn on the NFC switch", etc. Of course, a corresponding prompt may also be provided in the NFC identification area through a corresponding light effect.

If the identification is successful, the user may be prompted, and the next state may be entered, where the pending payment information is transferred from the payment terminal to the smartphone through a transferring visual effect (presenting the process of the bubble being extracted from the information display area). Referring to FIG. 6(d), it can be seen that the bubble is being extracted toward the right side, as if the smartphone is extracting the bubble. What is shown now is a state where more than half of the bubble has been extracted (this is a continuous dynamic extraction process, and only one frame is exemplarily shown); correspondingly, on the smartphone, the extracted portion of the bubble is gradually appearing. Since the extraction is not yet complete, the shape and state shown are still somewhat distorted and deformed, and have not yet fully stabilized.

During the transfer process, for example, the light effect from the previous stage may continue to be used, or a different light effect may be switched to.

FIG. 6(e) shows a schematic diagram of the effect where the pending payment information has been successfully transferred, i.e., the bubble has been inhaled into the smartphone. At this time, the bubble on the payment terminal has disappeared, and the bubble has arrived on the smartphone for the user to make payment.

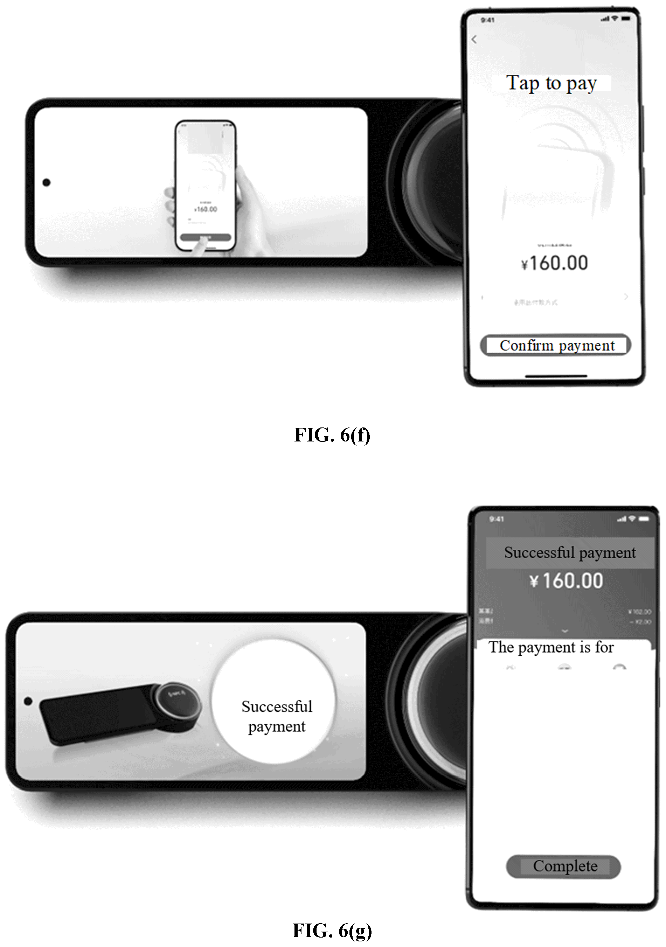

Referring to FIG. 6(f), the bubble may, for example, automatically expand (or may be triggered by the user to expand manually) to display more detailed information for the user to confirm payment. In FIG. 6(f), the smartphone has displayed detailed information based on the bubble, and the user can complete the payment by clicking a "Confirm Payment" button.

FIG. 6(g) shows prompt information after the current payment is successful. After successful payment, for example, a constant-on blue light effect may be displayed surrounding the NFC identification area, and a voice announcement may be made. If the payment fails, for example, a red light effect may be displayed, and a prompt to retry the payment may be provided.

If the payment fails, the bubble may be bounced back from the smartphone to the payment terminal through a transfer-regression visual effect, so that the user can tap to pay again.

Through the above novel payment terminal and payment interaction processing procedure, a novel virtual interaction experience across physical media can be provided to the user, and the entire payment process is both efficient and fun. Not only that, the exemplarily designed user interface has good humanization; whether it is visual prompts or operational procedures, they are concise and easy to understand, helping to ensure the security and accuracy of transactions while the user experiences the convenience of modern technology, and can bring a smoother and more pleasant payment experience to the user.

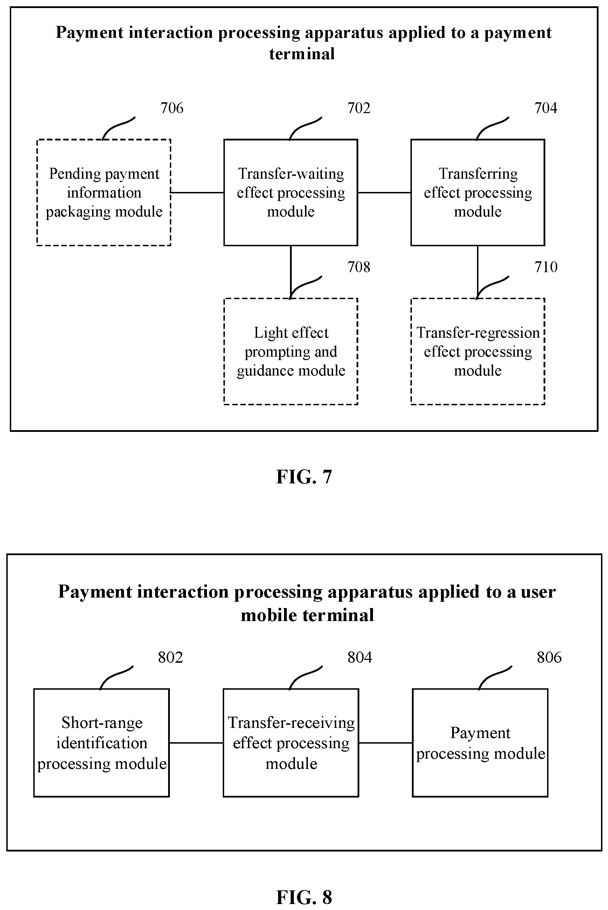

Based on the same idea, one or more embodiments of the present specification also provide the apparatus and device corresponding to the above methods, as shown in FIGS. 7-10. The apparatus and device can correspondingly execute the above methods and related optional solutions.

FIG. 7 is a schematic structural diagram of a payment interaction processing apparatus applied to a designated payment terminal according to one or more embodiments of the present specification. The apparatus includes: a transfer-waiting effect processing module 702, configured to determine pending payment information, and display, through a transfer-waiting visual effect, the pending payment information on the payment terminal; and a transferring effect processing module 704, configured to: in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

In some examples, the transfer-waiting effect processing module 702 displays, on the payment terminal, the pending payment information presenting a visual effect of waiting to be extracted from the payment terminal; and/or the transferring effect processing module 704 displays, on the payment terminal, the pending payment information presenting a visual effect of being extracted from the payment terminal; and transfers the pending payment information to the mobile terminal by completing a process of the extraction.

In some examples, the payment terminal includes an information display area for displaying the pending payment information, and the information display area is positioned close to the short-range identification area on the payment terminal; the transfer direction corresponding to the transferring visual effect is directed from the information display area toward the short-range identification area.

In some examples, the apparatus further includes: a pending payment information packaging module 706, configured to package, before the pending payment information is displayed on the payment terminal, the pending payment information as a virtual object for display and transfer on the payment terminal.

In some examples, the pending payment information packaging module 706 packages the pending payment information as a virtual item capable of reflecting purchased goods or service corresponding to the pending payment information.

In some examples, the apparatus further includes: a light effect prompting and guidance module 708, configured to, for different states corresponding to the pending payment information in the payment interaction processing, use a plurality of light effects in the short-range identification area for prompting or guidance.

In some examples, the light effect prompting and guidance module 708 presents the light effects surrounding the short-range identification area.

In some examples, the light effect prompting and guidance module 708 uses, for a transfer-waiting state and a transfer-completed state corresponding to the pending payment information in the payment interaction processing, light effects with different dynamics for prompting or guidance; and/or uses, for a payment-successful state and a payment-failed state corresponding to the pending payment information in the payment interaction processing, light effects with different colors for prompting or guidance.

In some examples, the apparatus further includes: a transfer-regression effect processing module 710, configured to: after the pending payment information is transferred to the mobile terminal through the transferring visual effect, retain, on the payment terminal, a copy of the pending payment information, but not display the copy; and in response to the mobile terminal failing to make payment for the received pending payment information, display the copy on the payment terminal through a transfer-regression visual effect.

In some examples, the short-range identification area includes a short-range wireless communication identification area for a mobile terminal that is to be used for payment and is to be brought close to for identification; the transferring effect processing module 704 uses a short-range wireless communication mode corresponding to the short-range wireless communication identification area to send the pending payment information to the mobile terminal, to implement the transfer of the pending payment information, and presents a process of the transfer through a corresponding visual effect.

FIG. 8 is a schematic structural diagram of a payment interaction processing apparatus applied to a mobile terminal used by a user for payment according to one or more embodiments of the present specification. The apparatus includes: a short-range identification processing module 802, configured to bring, under a handheld mobile operation of the user, the mobile terminal close to a short-range identification area included in a payment terminal, so as to allow the payment terminal to perform identification; a transfer-receiving effect processing module 804, configured to: in response to being successfully identified by the payment terminal, receive, through a transfer-receiving visual effect, the pending payment information transferred from the payment terminal; and a payment processing module 806, configured to perform payment according to the pending payment information.

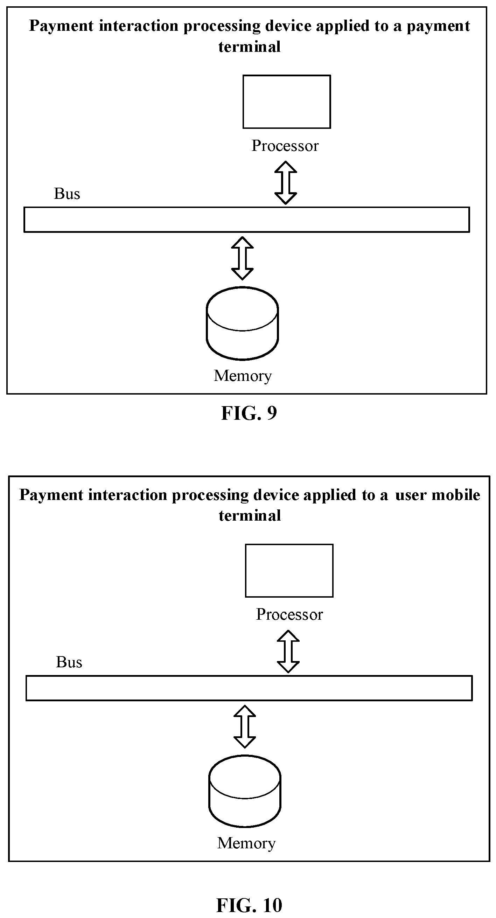

FIG. 9 is a schematic structural diagram of a payment interaction processing device applied to a designated payment terminal according to one or more embodiments of the present specification. The device includes: at least one processor; and a memory communicatively connected to the at least one processor; wherein the memory stores instructions executable by the at least one processor, the instructions, when executed by the at least one processor, cause the at least one processor to: determine pending payment information, and display, through a transfer-waiting visual effect, the pending payment information on the payment terminal; and in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

FIG. 10 is a schematic structural diagram of a payment interaction processing device applied to a mobile terminal used by a user for payment according to one or more embodiments of the present specification. The device includes: at least one processor; and a memory communicatively connected to the at least one processor; wherein the memory stores instructions executable by the at least one processor, the instructions, when executed by the at least one processor, cause the at least one processor to: bring, under a handheld mobile operation of the user, the mobile terminal close to a short-range identification area included in a payment terminal, so as to allow the payment terminal to perform identification; in response to being successfully identified by the payment terminal, receive, through a transfer-receiving visual effect, the pending payment information transferred from the payment terminal; and perform payment according to the pending payment information.

Based on the same idea, one or more embodiments of the present specification further provide a non-transitory computer storage medium, storing computer-executable instructions, applied to a designated payment terminal, the computer-executable instructions being configured to: determine pending payment information, and display, through a transfer-waiting visual effect, the pending payment information on the payment terminal; and in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

Based on the same idea, one or more embodiments of the present specification further provide a non-transitory computer storage medium, storing computer-executable instructions, applied to a mobile terminal used by a user for payment, the computer-executable instructions being configured to: bring, under a handheld mobile operation of the user, the mobile terminal close to a short-range identification area included in a payment terminal, so as to allow the payment terminal to perform identification; in response to being successfully identified by the payment terminal, receive, through a transfer-receiving visual effect, the pending payment information transferred from the payment terminal; and perform payment according to the pending payment information.

The systems, apparatuses, modules, or units set forth in the above embodiments may specifically be implemented by a computer chip or an entity, or by a product having a certain function. A typical implementation device is a computer. Specifically, the computer may, for example, be a personal computer, a laptop computer, a cellular phone, a camera phone, a smart phone, a personal digital assistant, a media player, a navigation device, an email device, a game console, a tablet computer, a wearable device, or any combination of these devices.

For convenience of description, when the above apparatuses are described, the apparatuses are described as being divided into various units according to functions. Certainly, when the present specification is implemented, the functions of the units may be implemented in one or more items of software and/or hardware.

A person skilled in the art should understand that embodiments of the present specification may be provided as a method, a system, or a computer program product. Therefore, the present specification may take the form of an entirely hardware embodiment, an entirely software embodiment, or an embodiment combining software and hardware aspects. Moreover, the present specification may take the form of a computer program product implemented on one or more computer-usable storage media containing computer-usable program code, including but not limited to magnetic disk storage, CD-ROM, optical storage, and the like.

The present specification is described with reference to flowcharts and/or block diagrams of methods, apparatuses (systems), and computer program products according to embodiments of the present specification. It should be understood that each process and/or block in the flowcharts and/or block diagrams, and combinations of processes and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine, such that instructions executed by the processor of the computer or other programmable data processing device create means for implementing the functions specified in one or more processes of the flowcharts and/or one or more blocks of the block diagrams.

These computer program instructions may also be stored in a computer-readable memory that can direct a computer or another programmable data processing device to function in a particular manner, such that instructions stored in the computer-readable memory produce an article of manufacture including instruction means, and the instruction means implements the functions specified in one or more processes of the flowcharts and/or one or more blocks of the block diagrams.

These computer program instructions may also be loaded onto a computer or another programmable data processing device, so that a series of operational steps are performed on the computer or other programmable device to produce computer-implemented processing, and thus the instructions executed on the computer or other programmable device provide steps for implementing the functions specified in one or more processes of the flowcharts and/or one or more blocks of the block diagrams.

In a typical configuration, a computing device includes one or more processors (CPUs), an input/output interface, a network interface, and a memory.

The memory may include forms such as non-permanent storage in a computer-readable medium, a random access memory (RAM), and/or a non-volatile memory, such as a read-only memory (ROM) or a flash RAM. The memory is an example of a computer-readable medium.

Computer-readable media include permanent and non-permanent, removable and non-removable media that may implement information storage by any method or technology. The information may be computer-readable instructions, data structures, program modules, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette tape, magnetic tape, magnetic disk storage, or other magnetic storage devices, or any other non-transitory medium that may be used to store information accessible by a computing device. As defined herein, computer-readable media do not include transitory computer-readable media, such as modulated data signals and carrier waves.

It should further be noted that the terms "comprise," "include," or any other variation thereof are intended to cover a non-exclusive inclusion, such that a process, method, article, or device that comprises a series of elements includes not only those elements, but also other elements not expressly listed, or further includes elements inherent to such process, method, article, or device. In the absence of more limitations, an element defined by the statement "comprising one ..." does not exclude the presence of additional identical elements in the process, method, article, or device that comprises the element.

The present specification may be described in the general context of computer-executable instructions executed by a computer, such as program modules. Generally, program modules include routines, programs, objects, components, data structures, and the like that perform particular tasks or implement particular abstract data types. The present specification may also be practiced in distributed computing environments in which tasks are performed by remote processing nodes connected through a communication network. In distributed computing environments, program modules may be located in local and remote computer storage media, including storage nodes.

The embodiments in the present specification are described in a progressive manner, and identical or similar parts among the embodiments may be referred to one another. Each embodiment focuses on differences from the other embodiments. In particular, as to apparatus, device and non-volatile computer storage medium embodiments, since they are substantially similar to method embodiments, the description thereof is relatively simple, and relevant parts may refer to the description of the method embodiments.

The foregoing describes particular embodiments of the present specification. Other embodiments are within the scope of the appended claims. In some cases, the actions or steps recited in the claims can be performed in an order different from that in the embodiments and still achieve desirable results. In addition, the processes depicted in the accompanying figures do not necessarily require the particular order shown, or sequential order, to achieve desirable results. In certain implementations, multitasking and parallel processing are also possible or may be advantageous.

The above descriptions are merely one or more embodiments of the present specification and are not intended to limit the present specification. For a person skilled in the art, various modifications and variations may be made to one or more embodiments of the present specification. Any modification, equivalent replacement, improvement, and the like made within the spirit and principle of one or more embodiments of the present specification shall fall within the scope of the claims of the present specification.

## Claims

1. A payment interaction processing method, applied to a designated payment terminal, the method comprising:
determining pending payment information, and displaying, through a transfer-waiting visual effect, the pending payment information on the payment terminal; and
in response to a mobile terminal used by a user for payment being successfully identified through a short-range identification area included in the payment terminal, transferring, through a transferring visual effect, the pending payment information to the mobile terminal, to cause the mobile terminal to receive, through a transfer-receiving visual effect, the pending payment information for completing payment.

2. The method according to claim 1, wherein the displaying, through a transfer-waiting visual effect, the pending payment information on the payment terminal specifically comprises:
displaying, on the payment terminal, the pending payment information presenting a visual effect of waiting to be extracted from the payment terminal; and/or
the transferring, through a transferring visual effect, the pending payment information to the mobile terminal specifically comprises:
displaying, on the payment terminal, the pending payment information presenting a visual effect of being extracted from the payment terminal;
transferring the pending payment information to the mobile terminal by completing a process of the extracting.

3. The method according to claim 1, wherein the payment terminal includes an information display area for displaying the pending payment information, and the information display area is positioned close to the short-range identification area on the payment terminal;
a transfer direction corresponding to the transferring visual effect is directed from the information display area toward the short-range identification area.

4. The method according to claim 1, wherein before the displaying the pending payment information on the payment terminal, the method further comprises:
packaging the pending payment information as a virtual object for display and transfer on the payment terminal.

5. The method according to claim 4, wherein the packaging the pending payment information as a virtual object specifically comprises:
packaging the pending payment information as a virtual item capable of reflecting purchased goods or service corresponding to the pending payment information.

6. The method according to claim 1, further comprising:
for different states corresponding to the pending payment information in the payment interaction processing, using a plurality of light effects in the short-range identification area for prompting or guidance.

7. The method according to claim 6, wherein the using a plurality of light effects in the short-range identification area for prompting or guidance specifically comprises:
presenting the light effects surrounding the short-range identification area.

8. The method according to claim 6, wherein the for different states corresponding to the pending payment information in the payment interaction processing, using a plurality of light effects in the short-range identification area for prompting or guidance specifically comprises:
using, for a transfer-waiting state and a transfer-completed state corresponding to the pending payment information in the payment interaction processing, light effects with different dynamics for prompting or guidance; and/or
using, for a payment-successful state and a payment-failed state corresponding to the pending payment information in the payment interaction processing, light effects with different colors for prompting or guidance.

9. The method according to claim 1, wherein after the transferring, through a transferring visual effect, the pending payment information to the mobile terminal, the method further comprises:
retaining, on the payment terminal, a copy of the pending payment information, but not displaying the copy;
in response to the mobile terminal failing to make payment for the received pending payment information, displaying the copy on the payment terminal through a transfer-regression visual effect.

10. The method according to any one of claims 1 to 9, wherein the short-range identification area includes a short-range wireless communication identification area for a mobile terminal that is to be used for payment and is to be brought close to for identification;
the transferring the pending payment information to the mobile terminal specifically comprises:
using a short-range wireless communication mode corresponding to the short-range wireless communication identification area to send the pending payment information to the mobile terminal, to implement the transfer of the pending payment information, and presenting a process of the transfer through a corresponding visual effect.

11. A payment interaction processing method, applied to a mobile terminal used by a user for payment, the method comprising:
bringing, under a handheld mobile operation of the user, the mobile terminal close to a short-range identification area included in a payment terminal, so as to allow the payment terminal to perform identification;
in response to being successfully identified by the payment terminal, receiving, through a transfer-receiving visual effect, pending payment information transferred from the payment terminal; and
performing payment according to the pending payment information.

12. A payment interaction processing apparatus, applied to a designated payment terminal, the apparatus comprising:
a transfer-waiting effect processing module, configured to determine pending payment information, and display, through a transfer-waiting visual effect, the pending payment information on the payment terminal; and
a transferring effect processing module, configured to: in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

13. The apparatus according to claim 12, wherein the transfer-waiting effect processing module displays, on the payment terminal, the pending payment information presenting a visual effect of waiting to be extracted from the payment terminal; and/or
the transferring effect processing module displays, on the payment terminal, the pending payment information presenting a visual effect of being extracted from the payment terminal; and transfers the pending payment information to the mobile terminal by completing a process of the extracting.

14. The apparatus according to claim 12, wherein the payment terminal includes an information display area for displaying the pending payment information, and the information display area is positioned close to the short-range identification area on the payment terminal;
a transfer direction corresponding to the transferring visual effect is directed from the information display area toward the short-range identification area.

15. The apparatus according to claim 12, further comprising:
a pending payment information packaging module, configured to package, before the pending payment information is displayed on the payment terminal, the pending payment information as a virtual object for display and transfer on the payment terminal.

16. The apparatus according to claim 15, wherein the pending payment information packaging module packages the pending payment information as a virtual item capable of reflecting purchased goods or service corresponding to the pending payment information.

17. The apparatus according to claim 12, further comprising:
a light effect prompting and guidance module, configured to, for different states corresponding to the pending payment information in the payment interaction processing, use a plurality of light effects in the short-range identification area for prompting or guidance.

18. The apparatus according to claim 17, wherein the light effect prompting and guidance module presents the light effects surrounding the short-range identification area.

19. The apparatus according to claim 17, wherein the light effect prompting and guidance module uses, for a transfer-waiting state and a transfer-completed state corresponding to the pending payment information in the payment interaction processing, light effects with different dynamics for prompting or guidance; and/or
uses, for a payment-successful state and a payment-failed state corresponding to the pending payment information in the payment interaction processing, light effects with different colors for prompting or guidance.

20. The apparatus according to claim 12, further comprising:
a transfer-regression effect processing module, configured to: after the pending payment information is transferred to the mobile terminal through the transferring visual effect, retain, on the payment terminal, a copy of the pending payment information, but not display the copy; and in response to the mobile terminal failing to make payment for the received pending payment information, display the copy on the payment terminal through a transfer-regression visual effect.

21. The apparatus according to any one of claims 12 to 20, wherein the short-range identification area includes a short-range wireless communication identification area for a mobile terminal that is to be used for payment and is to be brought close to for identification;
the transferring effect processing module uses a short-range wireless communication mode corresponding to the short-range wireless communication identification area to send the pending payment information to the mobile terminal, to implement the transfer of the pending payment information, and presents a process of the transfer through a corresponding visual effect.

22. A payment interaction processing apparatus, applied to a mobile terminal used by a user for payment, the apparatus comprising:
a short-range identification processing module, configured to bring, under a handheld mobile operation of the user, the mobile terminal close to a short-range identification area included in a payment terminal, so as to allow the payment terminal to perform identification;
a transfer-receiving effect processing module, configured to: in response to being successfully identified by the payment terminal, receive, through a transfer-receiving visual effect, the pending payment information transferred from the payment terminal; and
a payment processing module, configured to perform payment according to the pending payment information.

23. A payment interaction processing device, applied to a designated payment terminal, the device comprising:
at least one processor; and
a memory communicatively connected to the at least one processor;
wherein the memory stores instructions executable by the at least one processor, the instructions, when executed by the at least one processor, cause the at least one processor to:
determine pending payment information, and display, through a transfer-waiting visual effect, the pending payment information on the payment terminal; and
in response to a mobile terminal used by a user for payment being successfully identified through a short-range identification area included in the payment terminal, transfer, through a transferring visual effect, the pending payment information to the mobile terminal, to cause the mobile terminal to receive, through a transfer-receiving visual effect, the pending payment information for completing payment.

24. A payment interaction processing device, applied to a mobile terminal used by a user for payment, the device comprising:
at least one processor; and
a memory communicatively connected to the at least one processor;
wherein the memory stores instructions executable by the at least one processor, the instructions, when executed by the at least one processor, cause the at least one processor to:
bring, under a handheld mobile operation of the user, the mobile terminal close to a short-range identification area included in a payment terminal, so as to allow the payment terminal to perform identification;
in response to being successfully identified by the payment terminal, receive, through a transfer-receiving visual effect, the pending payment information transferred from the payment terminal; and
perform payment according to the pending payment information.
